# FASCICULE DE BREVET EUROPEEN

(11) **EP 2 419 262 B1**
(45) Date de publication et mention de la délivrance du brevet: **08.01.2014**
(21) Numéro de dépôt: 10717584.6
(22) Date de dépôt: 15.04.2010
(51) Int. Cl.: B29C 70/48, B29C 70/22, B29C 70/30, F16C 7/00, B29L 31/06

(54) **PROCEDE DE FABRICATION D'UNE BIELLE EN MATERIAU COMPOSITE AYANT DES EXTREMITES RENFORCEES**
VERFAHREN ZUR HERSTELLUNG EINER VERBUNDMATERIALVERBINDUNGSSTANGE MIT VERSTÄRKTEN ENDEN
METHOD FOR MANUFACTURING A COMPOSITE MATERIAL CONNECTING ROD HAVING REINFORCED ENDS

(30) Priorité: 16.04.2009 FR 0901846
(43) Date de publication de la demande: 22.02.2012
(73) Titulaire: Messier-Bugatti-Dowty, 78140 Velizy Villacoublay (FR)
(72) Inventeur: MASSON, Richard, 78530 Les Loges En Josas (FR); DUNLEAVY, Patrick, F-91120 Palaiseau (FR)
(74) Mandataire: Beaudouin-Lafon, Emmanuel
(86) Numéro de dépôt international: PCT/EP2010/054990
(87) Numéro de publication internationale: WO 2010/119111

(56) Documents cités:
- EP-A- 1 798 428
- US-A- 4 992 313

## Description

L'invention concerne un procédé pour fabriquer en matériau composite une bielle telle qu'une bielle de contrefiche d'atterrisseur d'aéronef.

### ARRIERE PLAN DE L'INVENTION

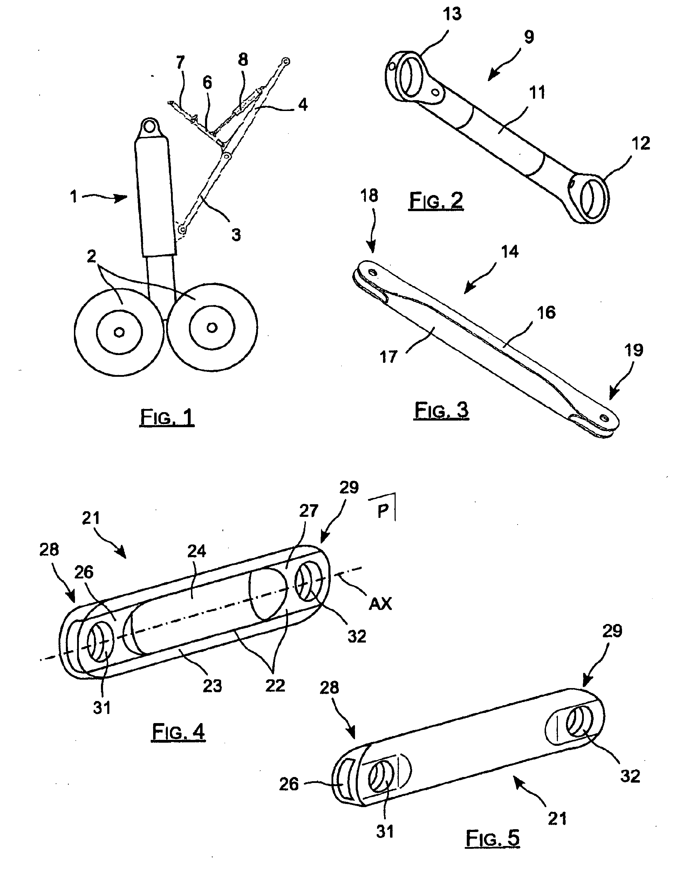

Comme représenté en figure 1, un atterrisseur comporte typiquement une jambe 1 ayant une extrémité supérieure articulée sur un élément de structure de l'aéronef et une extrémité inférieure portant un train de roues 2. Complémentairement, un système de blocage est prévu pour immobiliser l'ensemble en position déployée, comme c'est le cas dans la figure 1.

Ce système de blocage comporte une contrefiche incluant deux bielles 3 et 4 articulées entre elles, la bielle 3 étant articulée sur la jambe et l'autre bielle 4 étant articulée sur la structure de l'appareil, un organe de stabilisation étant par ailleurs prévu pour maintenir les deux bielles 3 et 4 alignées l'une avec l'autre.

L'organe de stabilisation comporte deux bras 6 et 7 articulés entre eux, le bras 6 étant articulé par exemple sur l'articulation reliant les bielles 3 et 4 l'une à l'autre, le bras 7 étant articulé sur la structure de l'appareil. Un système à butées et ressorts non représenté maintient les bras 6 et 7 dans le prolongement l'un de l'autre lorsque l'ensemble est déployé. Complémentairement, un vérin de déverrouillage 8 est interposé entre le bras 6 et la bielle 4 pour débloquer le tout en rétractant ce vérin à l'encontre du ressort.

Lors de l'atterrissage, ou lors des manoeuvres au sol, les bielles 3 et 4 qui sont maintenues alignées sont soumises à des efforts importants qui peuvent varier de façon brutale. Par exemple, lorsque les roues touchent le sol, elles sont instantanément mises en rotation, à l'encontre de leur inertie.

Dans une structure connue de bielle de contrefiche représentée en figure 2, la bielle 9 comprend une portion tubulaire 11, typiquement en aluminium, aux extrémités de laquelle sont fixés deux embouts 12 et 13 qui sont des pièces métalliques massives venues de fonderie ou de forgeage, présentant une ouverture pour constituer chacune une chape.

La structure tubulaire du corps de bielle 9 lui confère une tenue optimale au flambage, alors que les embouts d'extrémités 12 et 13, compte tenu de la quantité importante de matière qu'ils comportent, apportent la tenue requise au matage. Un tel embout assure une diffusion homogène des efforts appliqués par l'axe reçu dans cet embout, vers le corps de bielle tubulaire.

Pour réduire le poids d'une telle bielle, il est connu de remplacer le corps central tubulaire de la bielle 9 par un corps central tubulaire en matériau composite, par exemple à base de fibre de carbone. Mais cette solution reste limitée par le fait que les embouts métalliques 12 et 13 sont déterminants quant à la masse de l'ensemble de la bielle, compte tenu de la quantité de matière qu'ils comportent.

Selon l'architecture connue du document de brevet WO2009/000925, et qui est représentée en figure 3, la bielle, repérée par 14, a une structure générale tubulaire sans embout constituée de deux portions de section ouverte à parois minces 16 et 17 emboîtées l'une dans l'autre et collées. Chaque extrémité de cette bielle comporte deux extensions de la paroi mince de l'une des portions, conformées en chape double 18, 19, chaque demi-chape étant réalisée dans une portion d'extrémité de la paroi mince de l'une des portions.

Compte tenu de l'épaisseur relativement faible des chapes de cette bielle, la tenue de ces chapes au matage reste largement insuffisante pour une utilisation comme bielle de contrefiche.

Le document EP-A-1798428 décrit un procédé de fabrication d'une bielle en matériau composite ayant des extrémités renforcées comprenant les étapes de
- fabriquer un mandrin comprenant un manchon et des paliers solidarisés aux extrémités de ce manchon pour constituer un tout rigide
- appliquer une ou plusieurs couches de fibres tressées autour de ce mandrin par déplacement transversale le mandarin dans la machine de tressage avec une machine de tressage de fibres renforçantes;
- injecter et polymériser de la résine dans la ou les couches de fibres tressées pour établir une cohésion liant rigidement les couches de fibres tressées et au moins les extrémités du mandrin afin de former un corps de bielle à extrémités renforcées.

### OBJET DE L'INVENTION

Le but de l'invention est de proposer une solution pour remédier aux inconvénients ci-dessus.

### RESUME DE L'INVENTION

A cet effet, l'invention a pour objet un procédé de fabrication d'une bielle en matériau composite ayant des extrémités renforcées comme défini dans la revendication 1.

Le mandrin assure deux fonctions : il constitue un support sur lequel les fibres sont tressées selon une forme appropriée, et il apporte, grâce à ses extrémités renforcées, la résistance au matage nécessaire dans les régions de la bielle où les efforts extérieurs sont introduits.

L'invention permet ainsi de réaliser une bielle monobloc ayant des extrémités renforcées tout en utilisant une solution de tressage sur mandrin constituant des couches successives ayant des épaisseurs comparables.

Le gain de masse par rapport à une bielle en aluminium à embouts métalliques est significatif, et la bielle ainsi obtenue a une forme générale sans aspérité ni renfoncement, contribuant à diminuer le bruit aérodynamique de l'air s'écoulant autour de la bielle.

L'invention concerne également un procédé tel que défini ci-dessus, dans lequel le manchon et les inserts sont fabriqués avec un matériau composite comportant une résine du même type que la résine injectée dans les couches entourant le mandrin.

On obtient ainsi une cohésion optimale entre les inserts et les couches externes tressées, ce qui assure une transmission optimale des efforts appliqués à l'insert vers le reste de la bielle.

L'invention concerne également un procédé tel que défini ci-dessus, dans lequel le manchon et les inserts sont fabriqués avec un matériau composite comportant des fibres du même type que les fibres des couches entourant le mandrin.

L'invention concerne également un procédé tel que défini ci-dessus, dans lequel les inserts s'étendent au moins partiellement à l'intérieur des extrémités du manchon.

L'invention concerne également un procédé tel que défini ci-dessus, dans lequel chaque insert ou chaque portion d'insert est fabriqué conjointement avec tout ou partie du manchon pour assurer une cohésion optimale entre chaque insert et le manchon.

L'invention concerne également un procédé tel que défini ci-dessus, dans lequel on fabrique une première extrémité de mandrin comportant un insert et une portion de manchon, et une seconde extrémité de mandrin comportant un insert et une portion de manchon, et on assemble les deux extrémités pour former le mandrin.

L'invention concerne également un procédé tel que défini ci-dessus, dans lequel chaque extrémité du mandrin est obtenue en fabriquant une première moitié d'insert et un premier flasque conjointement afin de constituer une première moitié d'extrémité, ainsi qu'une seconde moitié d'insert et un second flasque conjointement afin de constituer une seconde moitié d'extrémité, avant d'assembler ces deux moitiés pour former une extrémité de mandrin.

### BREVE DESCRIPTION DES FIGURES

La figure 1 déjà décrite est une vue d'ensemble d'un atterrisseur ;
La figure 2 déjà décrite est une vue en perspective d'une bielle de contrefiche connue pour l'atterrisseur de la figure 1 ;
La figure 3 est une vue en perspective d'une bielle en matériau composite connue ;
La figure 4 est une vue de la bielle selon l'invention finie qui est représentée en coupe longitudinale ;
La figure 5 est une vue en perspective de la bielle selon l'invention finie ;
La figure 6 est une vue en perspective d'une demi-extrémité de mandrin de la bielle selon l'invention ;
La figure 7 est une vue en perspective d'une extrémité de mandrin de la bielle selon l'invention ;
La figure 8 est une vue en perspective du corps de mandrin de la bielle selon l'invention ;
La figure 9 est une vue en perspective de l'ensemble du mandrin de la bielle selon l'invention ;
La figure 10 est une vue en perspective illustrant l'opération de tressage de fibres de carbone autour du mandrin de la bielle selon l'invention ;
La figure 11 est une vue en perspective de la bielle selon l'invention avant découpe de ses extrémités.

### DESCRIPTION DETAILLEE DE L'INVENTION

L'idée à la base de l'invention est de fabriquer une bielle en matériau composite par tressage de fibres autour d'un mandrin comportant des extrémités qui sont renforcées pour accroître la tenue mécanique des extrémités de la bielle considérée dans son ensemble.

Le mandrin assure ainsi deux fonctions : il constitue un support sur lequel les couches de fibres sont tressées pour prendre la forme géométrique appropriée, et les inserts massifs de ses extrémités apportent le surcroît de matière nécessaire à la tenue au matage des chapes.

Comme visible dans les figures 4 et 5, la bielle selon l'invention qui s'étend longitudinalement selon un axe AX, est formée à partir d'un mandrin 22 en matériau composite, et autour duquel on tresse une ou plusieurs couches 23 de fibres renforçantes telles que des fibres de carbone.

Le mandrin 22 comprend un corps tubulaire creux 24 formant manchon, auquel sont solidarisés deux inserts 26 et 27 engagés dans les extrémités de ce corps creux tubulaire. Comme visible dans les figures, chaque extrémité 28, 29 de cette bielle 21 comporte un perçage 31, 32 traversant l'insert correspondant 26, 27 ainsi que les couches 23 de matériau composite tressé entourant cet insert, pour constituer une chape simple ayant ainsi une épaisseur importante lui conférant la tenue au matage requise.

Chaque extrémité du mandrin est fabriquée à partir de deux moitiés 33, 34 symétriques l'une de l'autre par rapport à un plan P de symétrie de la bielle qui contient l'axe AX, et qui sont accolées l'une à l'autre avant d'être partiellement cuites.

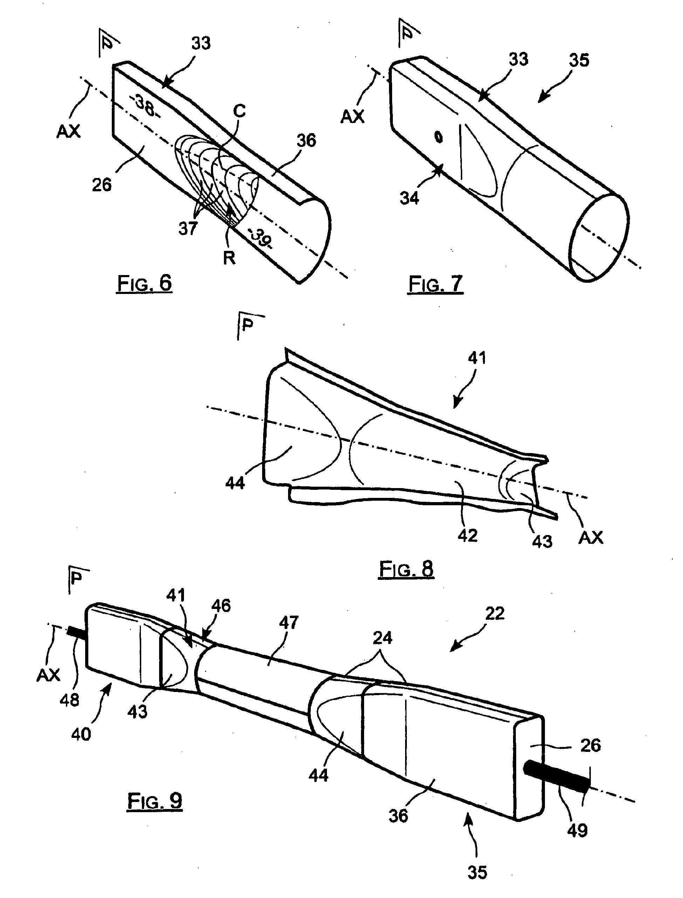

La moitié 33 qui apparaît seule en figure 6 est fabriquée dans un demi-moule non représenté qui a une forme spécialement conçue à cet effet, c'est-à-dire dont la partie creuse présente une section transversale évoluant depuis une forme rectangulaire jusqu'à une forme en demi-cercle.

Une ou plusieurs couches de matériau composite drapé sont d'abord appliquées sur toute la surface du fond de ce demi-moule pour constituer un flasque 36. Une série de couches additionnelles de composite drapé 37 sont ensuite appliquées les unes sur les autres, sur le flasque 36, dans la région présentant une section transversale rectangulaire, de manière à constituer une moitié de l'insert 26 sous forme d'une partie massive.

Le matériau composite drapé est un tissu de fibres de carbone préimprégné de résine, cette résine étant non solidifiée tant qu'il est maintenu à une température suffisamment basse. Cette résine se solidifie par cuisson.

Comme visible sur la figure 6, les couches additionnelles sont appliquées les unes sur les autres jusqu'à la dernière couche 38 qui coïncide avec le plan P. Ces couches ont des contour qui diffèrent les uns des autres, en étant définis pour que la surface de raccordement R qui s'étend depuis un bord de la couche 38 jusqu'à la face interne 39 du flasque 36 soit inclinée par rapport à la face interne du flasque 36.

Grâce à cet agencement, la transmission d'efforts mécaniques depuis l'insert vers la face interne du flasque se produit sans effet de concentration de contrainte.

Dans l'exemple des figures, cette surface de raccordement R a une forme qui correspond généralement au sommet d'un demi-ellipsoïde de révolution. L'intersection de cette surface de raccordement R avec un plan contenant l'axe AX et perpendiculaire au plan P étant un arc de courbe C en quart d'ellipse.

On réalise de manière analogue l'autre moitié d'extrémité 34, dans un autre demi-moule. Les deux demi-moules sont ensuite accolés l'un contre l'autre pour être en appui l'un sur l'autre au niveau du plan P. Un noyau est inséré entre les parties libres des flasques pour assurer leur plaquage contre les parois des demi-moules sur lesquelles les couches constituant ces flasques ont été appliquées.

Ensuite, le moule qui est chauffant est activé pour suivre un cycle de cuisson partielle du matériau composite qu'il renferme. Une fois ce cycle de cuisson terminé, une première extrémité 35 du mandrin a été fabriquée. Une autre extrémité de mandrin 40 est fabriquée de manière identique, éventuellement en utilisant le même moule.

Chaque demi-extrémité peut aussi être précuite séparément, avant collage des deux demi-extrémités l'une à l'autre. Dans ce cas, une opération de compression peut préalablement être réalisée, en appliquant sur l'ensemble des couches de matériau composite un film, et en établissant le vide entre ce film et la paroi du moule de manière à compresser ces couches.

Dans une autre opération, on réalise avec un autre moule, deux flancs destinés à constituer la portion centrale creuse du mandrin. Comme visible dans la figure 8, un tel flanc, repéré par 41 est fabriqué en appliquant dans un moule prévu à cet effet, une ou plusieurs couches de matériau composite drapé.

Ce flanc 41 est une paroi creuse qui a une forme généralement symétrique par rapport à un plan central normal à l'axe AX. Il comporte une portion centrale hémicylindrique 42, et deux extrémités 43 et 44 ayant chacune une terminaison présentant en section transversale une forme correspondant à celle de la lettre U, chaque extrémité ayant une section évoluant depuis la section en U vers la section en demi-cercle de la portion hémicylindrique 42.

Une fois que les couches constitutives de ce flanc ont été mises en place dans le moule, un film est placé sur ces couches, et le vide est établi pour les plaquer contre la paroi du moule, puis le moule est chauffé pour générer un cycle de cuisson partielle du flanc. Eventuellement, la cuisson partielle peut être précédée par une opération d'injection de résine.

Un autre flanc 46 est fabriqué de manière identique, en utilisant éventuellement le même moule. Le mandrin 22 est ensuite assemblé à partir de ses quatre éléments constitutifs que sont les flancs 41 et 46, et les deux extrémités 35 et 40.

Concrètement, la première extrémité 35 est positionnée dans l'extrémité 44 du flanc 41, dans laquelle elle s'emboîte, et l'extrémité 40 est placée dans l'extrémité 44 du flanc 41 dans laquelle elle s'emboîte également. A ce stade, le second flanc 46 peut être rapporté sur l'ensemble, de telle manière que ses extrémités s'emboîtent sur les extrémités 35 et 40, et qu'il délimite dans sa région centrale, conjointement avec l'autre flanc 41, une portion tubulaire.

Ces quatre composants qui ont tous subi un cycle de cuisson partielle peuvent être assemblés les uns aux autres par collage, ou bien avec de la résine, de manière à constituer un tout suffisamment rigide pour permettre l'opération suivante de tressage. Complémentairement, une couche additionnelle 47 de composite drapé peut être appliquée tout autour de la portion centrale du mandrin de manière à améliorer la cohésion des deux flancs 41 et 46 l'un avec l'autre.

Comme visible en figure 9, on a ainsi fabriqué un mandrin en matériau composite comportant un manchon 24 constitué par les flasques des extrémités et par les flancs 41 et 46, et qui comporte à l'intérieur de chacune de ses extrémités un insert massif.

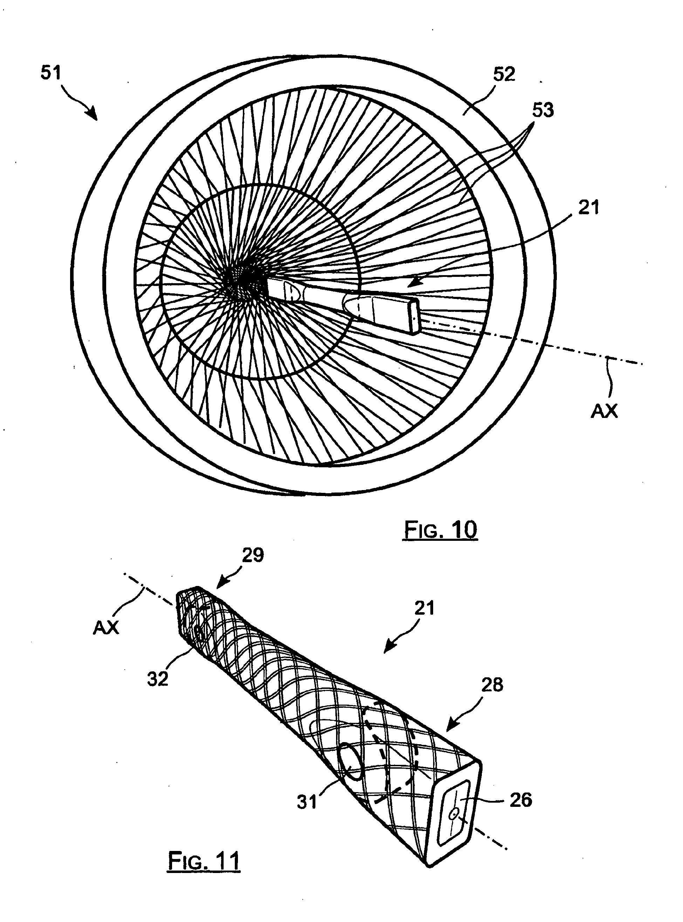

Des perçages sont ensuite réalisés à chaque extrémité, selon l'axe AX, pour solidariser à ce mandrin deux tiges 48 et 49 le prolongeant selon l'axe AX afin de permettre son montage dans une machine à tresser qui est représentée schématiquement en figure 10 en y étant repérée par 51.

Le mandrin 22 est alors installé dans la machine à tresser 51 qui comporte essentiellement un anneau porteur 52 à la face arrière duquel sont montées une série de bobines de fibre telles que des fibres de carbone, portées par des support mobiles rotatifs. Ces fibres 53 se rejoignent dans une région qui est située sensiblement sur l'axe AX tout en étant décalée le long de cet axe par rapport au plan de l'anneau support 52.

Comme visible sur la figure 10, l'anneau porteur 52 est centré sur l'axe AX, tout en s'étendant selon un plan normal à cet axe. Lorsque le cycle de tressage est lancé, le mandrin 22 est déplacé le long de l'axe AX par rapport à l'anneau porteur 52, ce qui provoque le tressage d'une chaussette de fibres à la face externe du mandrin 24.

En fonctionnement la vitesse du mandrin par rapport à l'anneau est ajustée pour que les fibres tressées autour de celui-ci soient orientées à soixante degrés par rapport à l'axe AX au niveau des extrémités de la bielle, et elle est ajustée pour que ces fibres soient inclinées à quarante-cinq degrés par rapport à l'axe AX dans la région centrale de la bielle.

Plusieurs passages sont ainsi réalisés pour constituer plusieurs couches de fibres tressées entourant le mandrin.

D'une manière générale, chaque couche a une épaisseur sensiblement constante, mais qui varie néanmoins dans une certaine mesure avec l'orientation des fibres par rapport à l'axe AX, cette orientation dépendant comme indiqué plus haut de la région de la bielle que l'on considère.

Par ailleurs, l'épaisseur de chaque couche tressée peut aussi être modifiée en fonction de la taille des fibres utilisées et du nombre de bobines employées. La quantité de matière déposée sera alors plus ou moins importante.

Il est encore possible de prévoir que des couches de fibres tressées s'étendent seulement sur une portion de la longueur de la bielle, par exemple au niveau des chapes, de manière à renforcer localement la bielle dans ces régions là.

Il est donc possible de moduler localement l'épaisseur de l'ensemble constitué par les différentes couches entourant le mandrin, de manière par exemple à optimiser l'uniformité de la contrainte mécanique subie par la bielle pour une sollicitation mécanique donnée.

Une fois que les différentes couches tressées ont été réalisées, la pièce brute ainsi constituée, qui comporte donc le mandrin entouré par les différentes couches de fibres, est placée dans un moule.

La résine est alors injectée de manière à imprégner complètement les différents couches de fibres tressées, jusqu'à atteindre la face externe du mandrin de manière à assurer la meilleure cohésion possible entre le mandrin et ces couches, en particulier au niveau des extrémités, afin d'obtenir une transmission optimale des efforts appliqués à chaque insert, vers les couches périphériques de fibres tressées.

Après injection de la résine, le moule est piloté pour provoquer un cycle de cuisson qui assure d'une part la cuisson complète des couches de matériau composite entourant le mandrin, et qui termine par ailleurs la cuisson des éléments constitutifs du mandrin.

Une fois la cuisson terminée, la pièce obtenue est percée à chacune de ses extrémités, pour réaliser les trous 31 et 32 qui traversent chacun un insert ainsi que les couches de matériau composite tressées périphériques, pour former les chapes de la bielle.

Complémentairement, une opération de fraisage et/ou de sciage est réalisée aux extrémités de la bielle pour donner à ces chapes une forme hémicylindrique concentrique aux trous, ce qui permet de terminer la forme extérieure de la bielle.

Une bague métallique, formant paliers de chape est ensuite montée dans chacun de ces trous 31, 32.

Dans l'exemple des figures, la bielle fabriquée est une bielle à deux chapes simples dont les paliers 31 et 32 sont orientés parallèlement l'un à l'autre. Mais le procédé permet également de réaliser des bielles dont les chapes sont tournées l'une par rapport à l'autre autour de l'axe AX.

Par exemple, la fabrication d'une bielle à deux chapes orientées à angle droit l'une par rapport à l'autre consiste à fabriquer un manchon du même type que celui des figures, mais dont les extrémités sont tournées d'un quart de tour l'une par rapport à l'autre.

Compte tenu de la capacité de l'opération de tressage à s'adapter à toute forme de mandrin, il est ainsi possible de réaliser une bielle dont l'orientation des chapes l'une par rapport à l'autre est à peu près quelconque.

Par ailleurs, dans l'exemple des figures, les inserts sont fabriqués par drapage, c'est-à-dire par application de couches tissus préimprégnées de résine, mais ils pourraient aussi bien être fabriqués en matériau composite comportant des fibres courtes non tissées amalgamées dans des directions quelconques en étant noyées dans une résine.

Le mandrin est fabriqué en matériau composite comportant une résine du même type que celle qui est injectée dans les couches externes tressées pour obtenir la meilleure cohésion avec ces couches externes, et les inserts comportent avantageusement des fibres du même type que celles des couches externes tressées pour présenter une résistance mécanique importante.

Cela étant, le mandrin pourrait être fabriqué dans un autre matériau, tant en ce qui concerne le manchon que pour ce qui est des inserts de renforcement, pour autant que ces éléments présentent les caractéristiques requises en ce qui concerne leur résistance mécanique et la possibilité d'assurer une cohésion optimale entre eux et les couches externes tressées.

La région centrale tubulaire du manchon peut avantageusement être remplie d'un gaz inerte tel que l'argon afin d'éviter tout phénomène de condensation ou similaire au cours des cycles de vie de la bielle.

Par ailleurs, il est à noter que le procédé selon l'invention peut avantageusement s'appliquer à la fabrication de pales d'hélicoptère et d'aubes de réacteurs en matériau composite, et d'une manière générale, à tout composant comprenant un corps en matériau composite dont une extrémité doit être renforcée.

## Revendications

1. Procédé de fabrication d'une bielle (21) en matériau composite ayant des extrémités (28, 29) renforcées, comprenant les étapes de :
- fabriquer un mandrin (22) comprenant un manchon (24) s'étendant longitudinalement et des inserts de renforcement (26, 27) solidarisés aux extrémités (35, 40) de ce manchon (24) pour constituer un tout rigide ;
- appliquer une ou plusieurs couches de fibres tressées (23) autour de ce mandrin (22) en le déplaçant longitudinalement dans une machine (51) de tressage de fibres (53) renforçantes afin de l'entourer sur toute sa longueur ;
- injecter et polymériser de la résine dans la ou les couches de fibres tressées (23) pour établir une cohésion liant rigidement les couches de fibres tressées (23) et au moins les extrémités (35, 40) du mandrin (22) afin de former un corps de bielle à extrémités (28, 29) renforcées ;
- percer pour réaliser à chaque extrémité (28, 29) du corps de bielle un orifice transversal (31, 32) traversant les couches de fibres tressées ainsi que l'insert (26, 27).

2. Procédé selon la revendication 1, dans lequel le manchon (24) et les inserts (26, 27) sont fabriqués avec un matériau composite comportant une résine du même type que la résine injectée dans les couches entourant le mandrin (22).

3. Procédé selon la revendication 1 ou 2, dans lequel le manchon (24) et les inserts (26, 27) sont fabriqués avec un matériau composite comportant des fibres du même type que les fibres des couches entourant le mandrin (22).

4. Procédé selon l'une des revendications 1 à 3, dans lequel les inserts (26, 27) s'étendent au moins partiellement à l'intérieur des extrêmités du manchon (24).

5. Procédé selon la revendication 4, dans lequel chaque insert (26, 27) ou chaque portion d'insert est fabriqué conjointement avec tout ou partie (36) du manchon (24) pour assurer une cohésion optimale entre les inserts (26, 27) et le manchon (24).

6. Procédé selon la revendication 4, dans lequel on fabrique une première extrémité (35) de mandrin (22) comportant un insert et une portion de manchon, et une seconde extrémité (40) de mandrin (22) comportant un insert et une portion de manchon, et on assemble les deux extrémités pour former le mandrin (22).

7. Procédé selon la revendication 6, dans lequel chaque extrémité (35, 40) du mandrin (22) est obtenue en fabriquant une première moitié d'insert et un premier flasque (36) conjointement afin de constituer une première moitié (33) d'extrémité (35), ainsi qu'une seconde moitié d'insert et un second flasque conjointement afin de constituer une seconde moitié (34) d'extrémité (35), avant d'assembler ces deux moitiés (34, 35) pour former une extrémité (35) de mandrin (22).

## Patentansprüche

1. Verfahren zur Herstellung einer Verbindungsstange (21) aus Verbundmaterial mit verstärkten Enden (28, 29), wobei das Verfahren die folgenden Schritte umfasst:
- Herstellung eines Dorns (22), der eine Hülse (24), die sich in Längsrichtung erstreckt, und Verstärkungseinsätze (26, 27) umfasst, die mit den Enden (35, 40) dieser Hülse (24) fest verbunden sind, um ein starres Ganzes zu bilden,
- Aufbringen einer oder mehrerer Schichten aus geflochtenen Fasern (23) um diesen Dorn (22) herum, indem er in Längsrichtung in eine Maschine (51) zum Flechten von Verstärkungsfasern (53) bewegt wird, um diesen in seiner gesamten Länge zu umschließen.
- Einspritzen und polymerisieren des Harzes in die Schicht oder die Schichten aus geflochtenen Fasern (23), um eine Kohäsion, die die Schichten aus geflochtenen Fasern (23) und mindestens die Enden (35, 40) des Dorns (22) verbindet, herzustellen, um einen Verbindungsstangenkörper mit verstärkten Enden (28, 29) zu bilden,
- Durchbohren, um an jedem Ende (28, 29) des Verbindungsstangenkörpers eine transversale Öffnung (31, 32) herzustellen, die durch die Schichten aus geflochtenen Fasern sowie den Einsatz (26, 27) verläuft.

2. Verfahren nach Anspruch 1, bei dem die Hülse (24) und die Einsätze (26, 27) mit einem Verbundwerkstoff hergestellt werden, der ein Harz des gleichen Typs wie das in die den Dorn (22) umschließenden Schichten eingespritzte Harz umfasst.

3. Verfahren nach Anspruch 1 oder 2, bei dem die Hülse (24) und die Einsätze (26, 27) mit einem Verbundwerkstoff hergestellt werden, der Fasern des gleichen Typs wie die den Dorn (22) umschließenden Fasern umfasst.

4. Verfahren nach einem der Ansprüche 1 bis 3, bei dem sich die Einsätze (26, 27) zumindest teilweise in das Innere der Enden der Hülse (24) erstrecken.

5. Verfahren nach Anspruch 4, bei dem jeder Einsatz (26, 27) oder jeder Abschnitt des Einsatzes zusammen mit der gesamten Hülse oder einem Teil (36) der Hülse (24) hergestellt wird, um eine optimale Kohäsion zwischen den Einsätzen (26, 27) und der Hülse (24) zu gewährleisten.

6. Verfahren nach Anspruch 4, bei dem ein erstes Ende (35) des Dorns (22), das einen Einsatz und einen Abschnitt der Hülse umfasst, und ein zweites Ende (40) des Dorns (22), das einen Einsatz und einen Abschnitt der Hülse umfasst, hergestellt und die beiden Enden zusammengefügt werden, um den Dorn (22) zu bilden.

7. Verfahren nach Anspruch 6, bei dem jedes Ende (35, 40) des Dorns (22) erhalten wird, indem gemeinsam eine erste Hälfte des Einsatzes und ein erster Flansch (36) hergestellt werden, um eine erste Hälfte (33) des Endes (35) herzustellen, sowie gemeinsam eine zweite Hälfte des Einsatzes und ein zweiter Flansch hergestellt werden, um eine zweite Hälfte (34) des Endes (35) zu bilden, bevor diese beiden Hälften zusammengefügt werden, um ein Ende (35) des Dorns (22) zu bilden.

## Claims

1. A method of fabricating a composite-material rod (21) having reinforced ends (28, 29), the method comprising the steps of:
· fabricating a mandrel (22) comprising a sleeve (24) extending longitudinally and reinforcing inserts (26, 27) secured to the ends (35, 40) of said sleeve (24) in order to constitute a rigid whole;
· applying one or more layers of braided fibers (23) around the mandrel (22) by moving it longitudinally into a machine (51) for braiding reinforcing fibers (53) in order to surround it al along its length;
· injecting and polymerizing resin into the layers(s) of braided fibers (23) in order to establish cohesion rigidly bonding the layers of braided fibers (23) and at least the ends (35, 40) of the mandrel (22) together in order to form a rod body having reinforced ends (28, 29); and
· drilling to make a through orifice (31, 32) at each end (28, 29) of the rod body, each orifice passing through the layers of braided fibers and through the corresponding insert (26, 27).

2. A method according to claim 1, wherein the sleeve (24) and the inserts (26, 27) are fabricated out of a composite material comprising a resin of the same type as the resin injected into the layers surrounding the mandrel (22).

3. A method according to claim 1 or claim 2, wherein the sleeve (24) and the inserts (26, 27) are made of a composite material comprising fibers of the same type as the fibers of the layers surrounding the mandrel (22).

4. A method according to any one of claims 1 to 3, wherein the inserts (26, 27) extend at least in part inside the ends of the sleeve (24).

5. A method according to claim 4, wherein each insert (26, 27) or each insert portion is fabricated together with all or part (36) of the sleeve (24) to provide optimum cohesion between the inserts (26, 27) and the sleeve (24).

6. A method according to claim 4, wherein first and second ends (35, 40) of the mandrel (22) are fabricated, each comprising an insert and a portion of sleeve, and the two ends are assembled together to form the mandrel (22).

7. A method according to claim 6, wherein each end (35, 40) of the mandrel (22) is obtained by fabricating a first insert half and a first shell (36) together in order to constitute a first half (33) of an end (35), and by fabricating a second insert half and a second shell together in order to constitute a second half (34) of an end (35), before assembling the two halves together (34, 35) in order to form an end (35) of the mandrel (22).
